# EUROPÄISCHE PATENTSCHRIFT

(11) **EP 2 734 407 B1**
(45) Veröffentlichungstag und Bekanntmachung des Hinweises auf die Patenterteilung: **10.08.2016**
(21) Anmeldenummer: 12727800.0
(22) Anmeldetag: 11.06.2012
(51) Int. Cl.: B60N 2/225

(54) **BESCHLAG MIT EINEM EIN BESCHLAGTEIL AXIAL SICHERNDEN ADAPTER**
FITTING WITH AN ADAPTER AXIALLY SECURING A FITTING PART
FERRURE DOTÉE D'UN ADAPTATEUR BLOQUANT AXIALEMENT UNE PARTIE DE FERRURE

(30) Priorität: 19.07.2011 DE 102011107997
(43) Veröffentlichungstag der Anmeldung: 28.05.2014
(73) Patentinhaber: Sitech Sitztechnik, 38442 Wolfsburg (DE)
(72) Erfinder: SZUMLANSKI, Bartosz, PL-59-300 Lubin (PL)
(74) Vertreter: Wöhltjen, Karsten
(86) Internationale Anmeldenummer: PCT/EP2012/002472
(87) Internationale Veröffentlichungsnummer: WO 2013/010609

(56) Entgegenhaltungen:
- WO-A2-2009/149876
- DE-B4-102007 009 172
- DE-U1-202009 007 513

## Beschreibung

Die Erfindung betrifft einen Beschlag, insbesondere einen Lehneneinstellbeschlag für einen Fahrzeugsitz, insbesondere für einen Kraftfahrzeugsitz, mit einem ersten, scheibenförmigen Beschlagteil, an welchem ein Hohlzahnkranz ausgebildet ist, und einem relativ zum ersten Beschlagteil um eine Drehachse des Beschlages verdrehbaren zweiten scheibenförmigen Beschlagteil, an welchem ein Stirnzahnrad ausgebildet ist, welches mit dem Hohlzahnkranz kämmt, wodurch die beiden Beschlagteile miteinander in Getriebeverbindung stehen, und einem drehbar gelagerten, von einem Mitnehmer angetriebenen, umlaufenden Exzentermittel zum Antrieb einer relativen Abwälzbewegung von Stirnzahnrad und Hohlzahnkranz.

Die Druckschrift DE 20 2009 007 513 U1 offenbart einen Beschlag für einen Fahrzeugsitz mit einem ersten Beschlagteil, an welchem ein Zahnkranz ausgebildet ist und einem zweiten Beschlagteil, an welchem ein Zahnrad ausgebildet ist. Das Zahnrad kämmt den Zahnkranz, wodurch die beiden Beschlagteile miteinander in Getriebeverbindung stehen. Der Beschlag umfasst ferner einen drehbar gelagerten, von einem Mitnehmer ausgetriebenen, umlaufenden Exzenter zum Antrieb einer relativen Abwälzeinrichtung von Zahnrad und Zahnkranz, wobei die beiden Beschlagteile in baulicher Hinsicht zusammen eine scheibenförmige, von einem Umklammerungsring zusammengehaltene Einheit bilden. Das erste Beschlagteil und der Umklammerungsring sind miteinander verbunden und nehmen das zweite Beschlagteil zwischen sich auf. Der Zahnkranz ist fest an dem mit dem ersten Beschlagteil verbundenen Umklammerungsring ausgebildet. Die Verbindung zwischen dem ersten Beschlagteil und dem Umklammerungsring wird durch Schweißen unter Ausbildung einer Schweißnaht hergestellt. In einer Ausführung wird die Schweißnaht zwischen dem erstem Beschlagteil und dem Umklammerungsring aus einer radialen Richtung, beispielsweise mittels Laserschweißen erzeugt. In einer anderen Ausführung wird eine Schweißnaht zwischen dem ersten Beschlagteil und dem Umklammerungsring, ebenfalls vorzugsweise mittels Laserschweißens aus einer axialen Richtung erzeugt. Der Umklammerungsring schützt das Zahnrad und bewirkt unter Aufnahme von axial wirkenden Kräften den Zusammenhalt der Beschlagteile in axialer Richtung, wie aus der in der Druckschrift DE 20 2009 007 513 U1 erwähnten Druckschrift DE 10 2006 044 490 A1 hervorgeht. Zur Sicherung der Beschlagteile und zur Anbindung der Beschlagteile an die jeweilige Sitzstruktur (Sitzteil und Rückenlehne) wird in nachteiliger Weise eine Vielzahl von Bauteilen benötigt.

Die Druckschrift DE 29 18 252 A1 lehrt einen Gelenkbeschlag für Sitze mit verstellbarer Lehne, bei denen ein dem Sitz zugeordneter fester Gelenkteil und ein der Lehne zugeordneter schwenkbarer Gelenkteil und ein der Lehne zugeordneter schwenkbarer Gelenkteil und ein der Lehne zugeordneter schwenkbarer Gelenkteil über eine Schwenkachse miteinander verbunden sind. Der Gelenkbeschlag weist ferner eine die Lage der beiden Gelenkteile zueinander bestimmende Ver- und Feststellvorrichtung auf. Bei der Ver- und Feststellvorrichtung ist einem Gelenkteil ein Innenzahnkranz zugeordnet und ein auf der schwenkbaren Achse angeordneter, durch einen Handgriff drehbarer Exzenter vorgesehen. Dem anderen Gelenkteil ist ein Innenzahnkranz zugeordnet, welcher mit dem Innenzahnkranz des einen Gelenkteiles durch unterschiedliche Zähnezahl der beiden Zahnkränze eine Zahnreihe bildet. Der innere Freiraum der Innenzahnkränze der Gelenkteile ist mit je einer Überbrückung versehen, in welchem das Lager für die Exzenterwelle des Exzenters angeordnet ist. Jede Überbrückung ist an dem jeweils zugeordneten Gelenkteil mittels einer Schweißverbindung gesichert. Die Überbrückungen sind direkt an die Sitzstruktur (Sitzteil und Rückenlehne) angeschweißt. Hinsichtlich einer einfachen Montage von Beschlag und Fahrzeugsitz wird das direkte Anschweißen an der Sitzstruktur als nachteilig erachtet.

Die Druckschrift DE 10 2007 009 172 B4 beschreibt einen Beschlag für einen Fahrzeugsitz, mit einem ersten Beschlagteil und mit einem relativ zum ersten Beschlagteil um eine Achse verdrehbaren zweiten Beschlagteil und einem die beiden Beschlagteile in axialer Richtung zusammenhaltenden Ring, wodurch der Beschlag eine scheibenförmige Einheit bildet. Es ist ein Adapter vorgesehen, welcher am ersten Beschlagteil, insbesondere auf Stoß, anliegt und welcher durch die Anlage am ersten Beschlagteil eine Verbindungsfläche definiert und welcher mittels einer Schweißnaht mit dem ersten Beschlagteil und/oder dem Ring verbunden ist. Dabei offenbart die Druckschrift, dass die Schweißnaht aus einer Richtung erzeugt wird, die innerhalb der Verbindungsfläche oder in einem flachen Winkel von bis zu + 25° zur Verbindungsfläche verläuft. Der Beschlag ist in einer Ausführung dadurch gekennzeichnet, dass das erste Beschlagteil, der Ring und der Adapter mittels der Schweißnaht miteinander verbunden sind. Es wird vorgeschlagen, die Schweißnaht durch einen Laserstrahl oder Elektronenstrahl zu erzeugen, welcher aus der Richtung innerhalb der Verbindungsfläche oder in dem flachen Winkel dazu auf den Stoß zwischen dem Adapter und dem ersten Beschlagteil zielt. Auch bei dieser Lösung werden in nachteiliger Weise zur Sicherung der Beschlagteile und zur Anbindung der Beschlagteile an die jeweilige Sitzstruktur (Sitzteil und Rückenlehne) viele miteinander zu verbindende Bauteile benötigt.

Der Erfindung liegt davon ausgehend die Aufgabe zugrunde, einen gewichts- und materialsparenden sowie sicheren Beschlag zu schaffen.

Ein aus der Druckschrift WO 2009/139876 A2 bekannter, dem Oberbegriff entsprechender Beschlag umfasst ein erstes, scheibenförmiges Beschlagteil, an welchem ein Hohlzahnkranz ausgebildet ist, und ein relativ zum ersten Beschlagteil um eine Drehachse des Beschlages verdrehbares zweites, scheibenförmiges Beschlagteil, an welchem ein Stirnzahnrad ausgebildet ist, welches mit dem Hohlzahnkranz kämmt, wodurch die beiden Beschlagteile miteinander in Getriebeverbindung stehen. Der Beschlag umfasst ferner ein drehbar gelagertes, von einem Mitnehmer angetriebenes, umlaufendes Exzentermittel zum Antrieb einer relativen Abwälzbewegung von Stirnzahnrad und Hohlzahnkranz. Der Beschlag weist das erste Beschlagteil ferner einen das zweite Beschlagteil übergreifenden Kragen auf, der gegenüber dem ersten Beschlagteil in axialer Richtung des Beschlages einen Versatz bildet, wobei der Kragen des ersten Beschlagteiles mit einer ersten Adapterplatte über ihre in axialer Richtung des Beschlages zueinander weisenden Flächen in Verbindung steht.

In Verbindung mit den zuvor genannten Merkmalen des Oberbegriffs des Anspruchs 1 ist erfindungsgemäß vorgesehen, dass die erste Adapterplatte in einem axialen Zwischenraum angeordnet ist, der von dem zweiten Beschlagteil und einer zweiten Adapterplatte gebildet wird, so dass durch die Verbindung des ersten Beschlagteiles mit der ersten Adapterplatte und durch den das zweite Beschlagteil übergreifenden Kragen des ersten Beschlagteiles eine axiale Sicherung des zwischen der ersten Adapterplatte und dem ersten Beschlagteil liegenden zweiten Beschlagteil bewirkbar ist.

In vorteilhafter Weise wird dadurch, dass der Kragen des ersten Beschlagteiles mit der ersten Adapterplatte in Verbindung steht und durch den das zweite Beschlagteil übergreifenden Kragen, erreicht, dass das zweite Beschlagteil axial gesichert ist, da das zweite Beschlagteil zwischen Adapterplatte und erstem Beschlagteil liegt, weshalb eine zusätzliche axiale Sicherung des ersten und zweiten Beschlagteiles entfällt.

Durch die Ausbildung des den Versatz bildenden Kragens wird dafür gesorgt, dass der Kragen des ersten Beschlagteiles das zweite Beschlagteil in axialer Richtung übergreift. Dadurch wird kein weiteres Bauteil zur axialen Sicherung des zweiten Beschlagteiles benötigt. In vorteilhafter Weise wird Material eingespart, wodurch das Gewicht des Beschlages insgesamt reduziert wird. Gleichzeitig wird durch die Ausbildung des Kragens des ersten Beschlagteiles, welcher mit der ersten Adapterplatte in Verbindung steht erreicht, dass außerdem ein in axialer Richtung gesicherter Beschlag in einer kompakten Bauweise herstellbar ist.

In weiterer bevorzugter Ausgestaltung der Erfindung ist das erste Beschlagteil topfförmig, in der Art eines "U" ausgebildet. Der Versatz des Kragens bildet gegenüber der Scheibe des ersten Beschlagteiles einen Rand, wodurch das zweite Beschlagteil in der Ebene des Kragens in dem U-förmigen ersten Beschlagteil einliegt.

Die Verbindung zwischen dem Kragen des ersten Beschlages und der ersten Adapterplatte wird in bevorzugter Ausgestaltung der Erfindung wie folgt hergestellt:
Die erste Adapterplatte und der Kragen sind über ihre in axialer Richtung des Beschlages zueinander weisenden Flächen aus radialer Richtung miteinander verschweißt, insbesondere laserverschweißt. Die erste Adapterplatte und der Kragen bilden in vorteilhafter Weise, durch die über eine erste Schweißnaht hergestellte Verbindung eine erste kinematische Einheit.

Hierdurch ergibt sich in bevorzugter Ausgestaltung der Erfindung, dass die in radialer Richtung ausgebildete Innenverzahnung des Hohlzahnkranzes des ersten Beschlagteiles auf der ebenfalls in radialer Richtung liegenden Innenseite des Kragens ausgebildet ist und in die Außenverzahnung des Stirnzahnrades des zweiten Beschlagteiles eingreift, wodurch die beiden Beschlagteile über die in radialer Richtung einander zugewandte Innenseite des Kragens - mit der Innenverzahnung des Hohlzahnkranzes - des ersten Beschlagteiles und über die Stirnseite - mit der Außenverzahnung des Stirnzahnrades - des zweiten Beschlagteiles miteinander in Getriebeverbindung stehen.

In bevorzugter Ausgestaltung der Erfindung, wird analog zu der Verschweißung der ersten Adapterplatte mit dem Kragen des zweiten Beschlagteiles auch bei dem zweiten Beschlagteil derart vorgegangen, dass eine zweite Adapterplatte und ein zweiter Kragenzug des zweiten Beschlagteiles über ihre in radialer Richtung des Beschlages zueinander weisenden Flächen aus axialer Richtung miteinander verschweißt, insbesondere laserverschweißt werden, wodurch sich durch die über eine zweite Schweißnaht hergestellte Verbindung eine zweite kinematische Einheit aus der zweiten Adapterplatte und dem zweiten Beschlagteil bildet.

Durch diese Vorgehensweise ergibt sich bei der Herstellung des Beschlages ein Zeit sparender Synergieeffekt. Es wird nicht nur das erste Beschlagteil mit der ersten Adapterplatte aus radialer Richtung kommend verschweißt, insbesondere laserverschweißt, sondern durch einfaches Umsetzen des Lasers wird auch die zweite Adapterplatte und der zweite Kragenzug des zweiten Beschlagteiles -jetzt aus axialer Richtung kommend - miteinander verschweißt.

Es ergibt sich ein kompakter, stabiler und schnell und somit effizient verstellbarer Beschlag, der im Wesentlichen aus zwei kinematischen Einheiten aufgebaut ist, deren Bauteile miteinander laserverschweißt sind. Die jeweilige Adapterplatte erlaubt es den Beschlag in einfacher Weise mit der Struktur des Sitzteiles beziehungsweise mit der Struktur der Rückenlehne eines Fahrzeugsitzes zu verbinden. Über die Größe und Form der jeweiligen Adapterplatte ist insbesondere eine einfache Anpassung eines Beschlages an unterschiedliche Fahrzeugsitze in einfacher Weise möglich. Die Verbindung der Bauteile der beiden kinematischen Einheiten mittels einer Schweißverbindung stellt eine besonders stabile und hohe Kräfte aufnehmende Verbindung dar, wodurch die axiale Sicherung des zweiten Beschlagteiles stabil und dauerhaft herstellbar ist.

Die Erfindung wird nachfolgend in einem Ausführungsbeispiel anhand der zugehörigen Figuren erläutert. Es zeigen:
- Figur 1: Aufbau eines Beschlages, insbesondere eines Lehneneinstellbeschlages in einer Schnittdarstellung;
- Figur 2A: eine perspektivische Ansicht des Lehneneinstellbeschlages - von links - mit Darstellung einer ersten, oberen und einer zweiten, unteren Adapterplatte;
- Figur 2B: eine perspektivische Ansicht des Lehneneinstellbeschlages - von links - mit Darstellung der ersten, oberen Adapterplatte;
- Figur 2C: eine perspektivische Ansicht des Lehneneinstellbeschlages - von rechts - mit Darstellung der ersten, oberen Adapterplatte;
- Figur 3A: ein Schnitt durch den Lehneneinstellbeschlag und
- Figur 3B: eine vergrößerte Darstellung eines Bereiches der Schnittdarstellung nach Figur 3A.

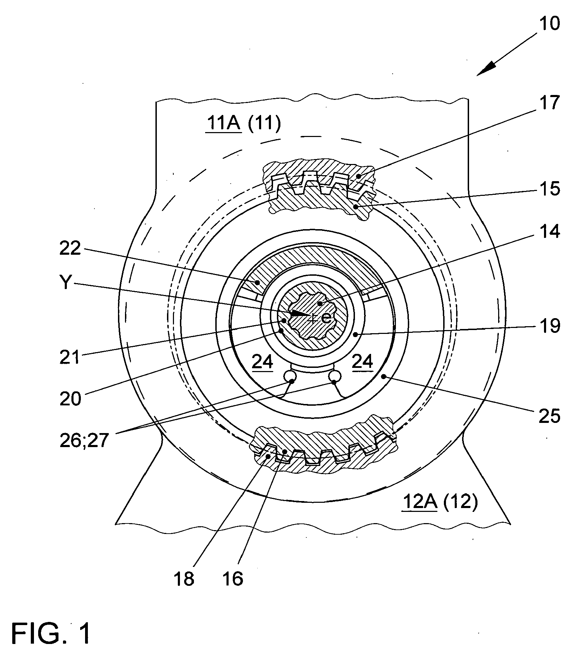

Figur 1 zeigt in einer Schnittdarstellung, quer zur Drehachse/Schwenkachse Y einen möglichen Aufbau eines Beschlages, insbesondere eines Lehneneinstellbeschlages 10.

Der auf einer oder auf beiden Sitzlängsseiten eines Fahrzeuges angeordnete und ein Sitzteil mit einer Rückenlehne verbindende Lehneneinstellbeschlag 10 weist ein mit dem Sitzteil verbundenes festes, zweites Beschlagteil 12 und ein mit der Rückenlehne verbundenes, gegenüber dem zweiten Beschlagteil 12 verstellbares, erstes Beschlagteil 11 auf, die durch die ein Exzentermittel 14 umfassende Schwenkachse Y miteinander verbunden sind, die Bestandteil einer als Getriebe ausgebildeten Ver- und Feststelleinrichtung sind.

Zu diesem Getriebe gehört ein beispielsweise durch Ausprägen aus dem zweiten Beschlagteil 12 gebildetes Stirnzahnrad 15 mit einer Außenverzahnung 16, die mit der Innenverzahnung 18 eines beispielsweise ebenfalls durch Ausprägen gebildeten Hohlzahnkranzes 17 des ersten Beschlagteiles 11 kämmt.

Der Durchmesser des Kopfkreises der Außenverzahnung 16 ist um wenigstens eine Zahnhöhe kleiner als der Durchmesser des Fußkreises der Innenverzahnung 18. Demgemäß weisen die Verzahnungen 16 und 18 Zähnezahlen auf, die sich um wenigstens einen Zahn unterscheiden, wobei die Zähnezahl der Innenverzahnung 18 größer ist als die Zähnezahl der Außenverzahnung 16. Die dargestellte Anordnung ist derart gewählt, dass sich die Außenverzahnung 16 an der Innenverzahnung 18 abwälzen kann.

Das erste Beschlagteil 11 weist konzentrisch zu seiner Innenverzahnung 18 einen ersten Kragenzug 19 auf, in welchem ein als Buchse ausgebildeter Mitnehmer 20 gelagert ist. Dieser vorzugsweise aus Kunststoff zumeist einstückig gebildete Mitnehmer 20 umfasst eine Nabe 21, die mit ihrem Außenmantel im ersten Kragenzug 19 des ersten Beschlagteiles 11 drehbar gelagert ist, wobei mit der Nabe 21 ein den Kragenzug 19 bereichsweise übergreifender und in radialem Abstand zur Nabe 21 angeordneter Mitnehmerarm 22 verbunden ist, der seinerseits ebenso wie die Nabe 21 an der Außenseite des Beschlages 10 in eine den Getriebebereich übergreifende Abdeckscheibe (nicht dargestellt) übergeht.

In der Ebene des Mitnehmerarmes 22 sind an dem ersten Kragenzug 19 zwei Keilsegmente 24 mit ihren Innenflächen abgestützt, die mit ihrem Außenmantel an einem im Stirnzahnrad 15 des zweiten Beschlagteiles 12 fixierten Lagerring 25, der als zweiter Kragenzug ausgebildet ist, in Berührung stehen.

Während die schmalen Stirnseiten der Keilsegmente 24 sich bei Feststelllage des Lehneneinstellbeschlages 10 in geringem Abstand zum Mitnehmerarm 22 befinden, sind die breiten Stirnseiten der Keilsegmente 24 durch die Federschenkel 27 einer Ringfeder 26 im Sinne einer Auseinanderspreizung beaufschlagt.

Diese Keilsegmente 24 erzeugen zusammen mit dem ersten Kragenzug 19 des ersten Beschlagteiles 11 einen Exzenterabschnitt, durch welchen das Stirnzahnrad 15 mit seiner Außenverzahnung 16 in die Innenverzahnung 18 des Hohlzahnkranzes 17 des ersten Beschlagteiles 11 in Verlängerung des Exzenterhöchstpunktes gedrückt wird.

Die beschriebene detaillierte Beschreibung des Aufbaus des Lehneneinstellbeschlages 10 dient dem Verständnis. Insbesondere die in Figur für den Antrieb des Lehneneinstellbeschlages 10 verantwortlichen Bauteile 20, 21, 22, 24, 26 stellen nur eine spezifische Ausgestaltung des beispielhaft dargestellten Lehneneinstellbeschlages 10 dar.

Als wesentliche die Erfindung betreffende Bauteile des Lehneneinstellbeschlages werden der Hohlzahnkranz 11 des ersten Beschlagteiles und das Stirnzahnrad 12 des zweiten Beschlagteiles betrachtet, wie nachfolgend näher erläutert wird.

Die Beschlagteile 11, 12 sind auf besonders vorteilhafte Weise mit jeweils einer Adapterplatte 11A, 12A verbunden.

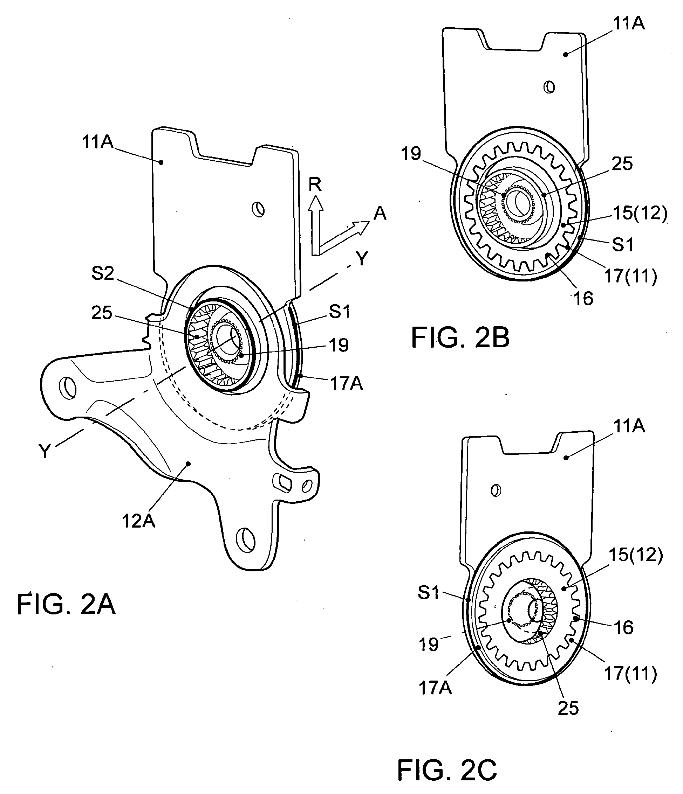

Figur 2A zeigt eine perspektivische Ansicht des Lehneneinstellbeschlages 10 - von links - mit Darstellung einer ersten, oberen und einer zweiten, unteren Adapterplatte 11A, 12A. Von links nach rechts entlang der Drehachse Y in axialer Richtung A gesehen ist als erstes die zweite, untere Adapterplatte 12A angeordnet, die fest mit dem Sitzteil eines Fahrzeugsitzes verbunden ist. Eine Stirnseite des zweiten Kragenzuges 25 ist sichtbar. Auf dem zweiten Kragenzug 25 des zweiten Beschlagteiles 12 liegt die zweite, untere Adapterplatte 12A. Die zweite, untere Adapterplatte 12A weist in diesem Bereich eine Materialstärke auf, die in etwa der Breite des zweiten Kragenzuges 25 entspricht. Zwischen der zweiten, unteren Adapterplatte 12A und dem zweiten Kragenzug 25 ist eine Stirnseite einer zweiten Schweißnaht S2 sichtbar. Die zweite, untere Adapterplatte 12A und der zweite Kragenzug 25 des zweiten Beschlagteiles 12 sind über ihre in radialer Richtung R des Lehneneinstellbeschlages 10 zueinander weisenden Flächen aus axialer Richtung A miteinander verschweißt. Sie bilden gemeinsam eine zweite kinematische Einheit 12, 12A, 25 aus.

In axialer Richtung A schließt sich eine erste, obere Adapterplatte 11A an. Hinter der ersten, oberen Adapterplatte 11A ist eine Stirnseite einer ersten Schweißnaht S1 sichtbar, an die sich eine Stirnseite eines Kragens 17A des ersten Beschlagteiles 11 anschließt. Die erste, obere Adapterplatte 11A und der Kragen 17A des ersten Beschlagteiles 11 sind über ihre in axialer Richtung A des Lehneneinstellbeschlages 10 zueinander weisenden Flächen aus radialer Richtung R miteinander verschweißt. Sie bilden gemeinsam eine kinematische Einheit 11, 11A, 17A aus.

Figur 2B zeigt eine perspektivische Ansicht des Lehneneinstellbeschlages 10 - von links - mit Darstellung der ersten, oberen Adapterplatte 11A, bei der die zweite, untere Adapterplatte 12A weggelassen wurde. Hierdurch wird der zweite Kragenzug 25 sichtbar. Zudem wird das Stirnzahnrad 15 des zweiten Beschlagteiles 12 mit seiner Außenverzahnung 16 und der Hohlzahnkranz 17 des ersten Beschlagteiles 11 mit seiner Innenverzahnung 18 sichtbar. Der erste zum ersten Beschlagteil 11 gehörende Kragenzug 19 ist in beiden Figuren 2A, 2B gleichermaßen sichtbar.

Figur 2C zeigt eine perspektivische Ansicht des Lehneneinstellbeschlages 10 - von rechts - mit Darstellung der ersten, oberen Adapterplatte 11A. Die Ansicht von rechts zeigt sozusagen die Rückseite des Lehneneinstellbeschlages 10, wodurch wieder in das Stirnzahnrad 15 des zweiten Beschlagteiles 12 und der Hohlzahnkranz 17 des ersten Beschlagteiles 11 von der Rückseite gesehen sichtbar wird. Erkennbar ist zudem der Kragen 17A des ersten Beschlagteiles 11, der über die in radialer Richtung R liegende erste Schweißnaht S1 mit der ersten, oberen Adapterplatte 11A verbunden ist.

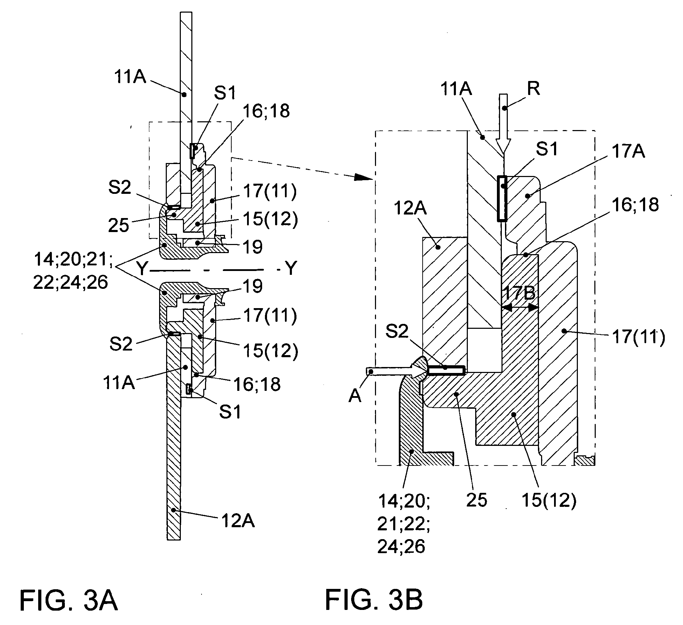

Figur 3A zeigt zur weiteren Verdeutlichung des Aufbaus des Lehneneinstellbeschlages 10 einen Schnitt durch den Lehneneinstellbeschlag 10.

Auf die detaillierte Darstellung des Antriebes wurde verzichtet. Der Antrieb ist vereinfacht schematisiert dargestellt. Zur Verdeutlichung wurden die jeweils ein Bauteil repräsentierenden Bezugszeichen 14, 20, 21, 22, 24, 26 angetragen, mittels denen gemäß Figur 1 beispielhaft eine mögliche Antriebsart eines Lehneneinstellbeschlages 10 beschrieben worden ist.

Der Schnitt der Figur 3A durch einen Lehneneinstellbeschlag 10 verdeutlicht noch einmal die Lage der Bauteile zueinander. Die zweite kinematische Einheit aus dem zweiten Beschlagteil 12 und der zweiten, unteren Adapterplatte 12A wird über die zweite Schweißnaht S2 hergestellt, die am zweiten Kragenzug 25 des zweiten Beschlagteiles 12 in axialer Richtung A liegend hergestellt wird.

Das zweite Beschlagteil 12 und die zweite, untere Adapterplatte 12A bilden einen axialen Zwischenraum in dem die erste obere Adapterplatte 11A Platz findet. Die mit den Beschlagteilen 11, 12 fest verschweißten Adapterplatten 11A, 12A sind bei einer Relativbewegung der Beschlagteile 11, 12 im Falle einer Rückenlehnenverstellung zueinander beweglich. Die erste kinematische Einheit aus dem ersten Beschlagteil 11 und der ersten, oberen Adapterplatte 11A wird über die erste Schweißnaht S1 hergestellt, wobei die erste, obere Adapterplatte und der Kragen 17A über ihre in axialer Richtung A des Lehneneinstellbeschlages 10 zueinander weisenden Flächen aus radialer Richtung R miteinander verschweißt sind.

Figur 3B zeigt eine vergrößerte Darstellung eines Bereiches der Schnittdarstellung nach Figur 3A. Insbesondere in Figur 3B wird sichtbar, dass der Kragen 17A des ersten Beschlagteiles 11 das zweite Beschlagteil 12, insbesondere das Stirnzahnrad 15 des zweiten Beschlagteiles in axialer Richtung A übergreift.

Dadurch entsteht die dargestellte Anordnung der Bauteile zueinander, die sich dadurch auszeichnet, dass die in radialer Richtung R ausgebildete Innenverzahnung 18 des Hohlzahnkranzes 17 des ersten Beschlagteiles 11 auf der in radialer Richtung R liegenden Innenseite des Kragens 17A ausgebildet ist und in die Innenverzahnung 16 des Stirnzahnrades 15 des zweiten Beschlagteiles 12 eingreift, wodurch die beiden Beschlagteile 11, 12 über den Kragen 17A miteinander in Getriebeverbindung stehen. Die Innenverzahnung 18 des Hohlzahnkranzes 17 des ersten Beschlagteiles 11 ist integraler Bestandteil des Kragens 17A.

Der Kragen 17A bildet gegenüber der Scheibe des ersten Beschlagteiles 11 einen axialen Versatz 17B aus, der in Figur 3B im Bereich des Stirnzahnrades 15 des zweiten Beschlagteiles 12 angetragen ist.

Durch diesen Versatz 17B entsteht ein U-förmig ausgebildetes erstes Beschlagteil 11 mit einem topfartigen Rand. In diesem Topf liegt die Scheibe des zweiten Beschlagteiles 12, welches durch die topfartige Ausbildung des ersten Beschlagteiles 11 in der gleichen Ebene angeordnet werden kann, wie der Kragen 17A des ersten Beschlagteiles 11.

Der Versatz 17B des Kragens 17 ist derart ausgebildet, dass er im Wesentlichen der Breite der Scheibe des zweiten Beschlagteiles 12 entspricht, wobei sichergestellt ist, das ausreichend Axialspiel zwischen dem ersten und dem zweiten Beschlagteil 11, 12 und dem zweiten Beschlagteil 12 und der ersten, oberen Adapterplatte 11A des ersten Beschlagteiles 11 besteht.

Die Figur 3B verdeutlicht in der vergrößerten Darstellung, wie das zweite Beschlagteil 12 zwischen der ersten, oberen Adapterplatte 11A und der Scheibe des ersten Beschlagteiles 11 axial gesichert ist. Der Kragen 17A ist mit der ersten, oberen Adapterplatte 11A verschweißt und sichert das zweite Beschlagteil 12 in axialer Richtung A.

### Bezugszeichenliste

- 10: Lehneneinstellbeschlag
- 11: erstes Beschlagteil, schwenkbar
- 11A: erste Adapterplatte
- 12: zweites Beschlagteil, fest
- 12A: zweite Adapterplatte
- 13: Federelement
- 14: Exzentermittel
- 15: Stirnzahnrad
- 16: Außenverzahnung
- 17: Hohlzahnkranz
- 17A: Kragen
- 17B: Versatz
- 18: Innenverzahnung
- 19: erster Kragenzug/Teil des Hohlzahnkranzes 17
- 20: Mitnehmer
- 21: Nabe
- 22: Mitnehmerarm
- 24: Keilsegment
- 25: zweiter Kragenzug/ Teil des Stirnzahnrades 15
- 26: Federelement
- 27: Federschenkel eines Federelementes
- S1: erste Schweißnaht
- S2: zweite Schweißnaht
- R: radiale Richtung
- A: axialer Richtung
- e: Exzentrizität
- Y: Drehachse des Beschlages

## Patentansprüche

1. Beschlag für einen Fahrzeugsitz mit einem ersten, scheibenförmigen Beschlagteil (11), an welchem ein Hohlzahnkranz (17) ausgebildet ist, und einem relativ zum ersten Beschlagteil (11) um eine Drehachse (Y) des Beschlages verdrehbaren zweiten scheibenförmigen Beschlagteil (12), an welchem ein Stirnzahnrad (15) ausgebildet ist, welches mit dem Hohlzahnkranz (17) kämmt, wodurch die beiden Beschlagteile (11, 12) miteinander in Getriebeverbindung stehen, und einem drehbar gelagerten, von einem Mitnehmer (20) angetriebenen, umlaufenden Exzentermittel (14) zum Antrieb einer relativen Abwälzbewegung von Stirnzahnrad (15) und Hohlzahnkranz (17), wobei das erste Beschlagteil (11) einen das zweite Beschlagteil (12) übergreifenden Kragen (17A) aufweist, der gegenüber dem ersten Beschlagteil (11) in axialer Richtung (A) des Beschlages einen Versatz (17B) bildet, wobei der Kragen (17A) des ersten Beschlagteiles (11) mit einer ersten Adapterplatte (11A) des ersten Beschlagteiles (11) über ihre in axialer Richtung (A) des Beschlages zueinander weisenden Flächen in Verbindung steht, **dadurch gekennzeichnet, dass** die erste Adapterplatte (11A) in einem axialen Zwischenraum angeordnet ist, der von dem zweiten Beschlagteil (12) und einer zweiten Adapterplatte (12A) des zweiten Beschlagteiles (12) gebildet wird, so dass durch die Verbindung des ersten Beschlagteiles (11) mit der ersten Adapterplatte (11A) und durch den das zweite Beschlagteil (12) übergreifenden Kragen (17A) des ersten Beschlagteiles (11) eine axiale Sicherung des zwischen der ersten Adapterplatte (11A) und dem ersten Beschlagteil (11) liegenden zweiten Beschlagteil (12) bewirkbar ist.

2. Beschlag nach Anspruch 1, **dadurch gekennzeichnet, dass** das erste Beschlagteil (11) topfförmig, in der Art eines "U" ausgebildet ist, wobei der axiale Versatz (17B) des Kragens (17A) gegenüber der Scheibe des ersten Beschlagteiles (11) einen Rand des topfartigen ersten Beschlagteiles (11) bildet, wodurch das zweite Beschlagteil (12) in der Ebene des Kragens (17A) in dem U-förmigen ersten Beschlagteil (11) einliegt.

3. Beschlag nach Anspruch 1, **dadurch gekennzeichnet, dass** die erste Adapterplatte (11A) und der Kragen (17A) der ersten Beschlagteiles (11) über ihre in axialer Richtung (A) des Beschlages zueinander weisenden Flächen aus radialer Richtung (R) miteinander verschweißt werden und durch die über eine erste Schweißnaht (S1) hergestellte Verbindung eine erste kinematische Einheit (11, 11A, 17A) bilden.

4. Beschlag nach Anspruch 3, **dadurch gekennzeichnet, dass** die erste Adapterplatte (11A) und der Kragen (17A) der ersten Beschlagteiles (11) über ihre in axialer Richtung (A) des Beschlages zueinander weisenden Flächen aus radialer Richtung (R) miteinander laserverschweißt sind.

5. Beschlag nach Anspruch 1, **dadurch gekennzeichnet, dass** die in radialer Richtung (R) ausgebildete Innenverzahnung (18) des Hohlzahnkranzes (17) des ersten Beschlagteiles (11) auf der in radialer Richtung (R) liegenden Innenseite des Kragens (17A) ausgebildet ist und in die ebenfalls in radialer Richtung (R) angeordnete gegenüber liegende Außenverzahnung (16) des Stirnzahnrades (15) des zweiten Beschlagteiles (12) eingreift, wodurch die beiden Beschlagteile (11, 12) miteinander in Getriebeverbindung stehen.

6. Beschlag nach Anspruch 1, **dadurch gekennzeichnet, dass** die zweite Adapterplatte (12A) und ein zweiter Kragenzug (25) des zweiten Beschlagteiles (12) über ihre in radialer Richtung (R) des Beschlages zueinander weisenden Flächen aus axialer Richtung (A) miteinander verschweißt werden und durch die über eine zweite Schweißnaht (S2) hergestellte Verbindung eine zweite kinematische Einheit (12, 12A, 25) bilden.

7. Beschlag nach Anspruch 1, **dadurch gekennzeichnet, dass** die zweite Adapterplatte (12A) und ein zweiter Kragenzug (25) des zweiten Beschlagteiles (12) über ihre in radialer Richtung (R) des Beschlages zueinander weisenden Flächen aus axialer Richtung (A) miteinander laserverschweißt sind.

## Claims

1. Fitting for a vehicle seat, with a first disc-like fitting part (11), on which a hollow toothed ring (17) is formed, and with a second disc-like fitting part (12) which is rotatable relative to the first fitting part (11) about an axis of rotation (Y) of the fitting and on which a spur gear (15) is formed, said spur gear meshing with the hollow toothed ring (17), as a result of which the two fitting parts (11, 12) form a gear connection with each other, and with a rotatably mounted, revolving eccentric means (14), which is driven by a driver (20), for driving a relative rolling movement of spur gear (15) and hollow toothed ring (17), wherein the first fitting part (11) has a collar (17A) which embraces the second fitting part (12) and forms an offset (17B) in relation to the first fitting part (11) in the axial direction (A) of the fitting, wherein the collar (17A) of the first fitting part (11) is connected to a first adapter plate (11A) of the first fitting part (11) via their surfaces facing each other in the axial direction (A) of the fitting, **characterized in that** the first adapter plate (11A) is arranged in an axial intermediate space which is formed by the second fitting part (12) and a second adapter plate (12A) of the second fitting part (12), and therefore, by means of the connection of the first fitting part (11) to the first adapter plate (11A) and by means of the collar (17A) of the first fitting part (11), the collar embracing the second fitting part (12), axial securing of the second fitting part (12) located between the first adapter plate (11A) and the first fitting part (11) can be brought about.

2. Fitting according to Claim 1, **characterized in that** the first fitting part (11) is of cup-shaped design, in the manner of a "U", wherein the axial offset (17B) of the collar (17A) in relation to the disc of the first fitting part (11) forms an edge of the cup-like first fitting part (11), as a result of which the second fitting part (12) lies in the plane of the collar (17A) in the U-shaped first fitting part (11).

3. Fitting according to Claim 1, **characterized in that** the first adapter plate (11A) and the collar (17A) of the first fitting part (11) are welded to each other from the radial direction (R) via their surfaces facing each other in the axial direction (A) of the fitting and, by means of the connection produced via a first weld seam (S1), form a first kinematic unit (11, 11A, 17A).

4. Fitting according to Claim 3, **characterized in that** the first adapter plate (11A) and the collar (17A) of the first fitting part (11) are laser-welded to each other from the radial direction (R) via their surfaces facing each other in the axial direction (A) of the fitting.

5. Fitting according to Claim 1, **characterized in that** the internal toothing (18) of the hollow toothed ring (17) of the first fitting part (11), which internal toothing is formed in the radial direction (R), is formed on the inside of the collar (17A) lying in the radial direction (R) and engages in the opposite external toothing (16) of the spur gear (15) of the second fitting part (12), which external toothing is likewise arranged in the radial direction (R), as a result of which the two fitting parts (11, 12) form a gear connection with each other.

6. Fitting according to Claim 1, **characterized in that** the second adapter plate (12A) and a second drawn collar (25) of the second fitting part (12) are welded to each other from the axial direction (A) via their surfaces facing each other in the radial direction (R) of the fitting and, by means of the connection produced via a second weld seam (S2), form a second kinematic unit (12, 12A, 25).

7. Fitting according to Claim 1, **characterized in that** the second adapter plate (12A) and a second drawn collar (25) of the second fitting part (12) are laser-welded to each other from the axial direction (A) via their surfaces facing each other in the radial direction (R) of the fitting.

## Revendications

1. Ferrure pour un siège de véhicule, comprenant une première partie de ferrure en forme de disque (11) au niveau de laquelle est réalisée une couronne dentée creuse (17) et une deuxième partie de ferrure en forme de disque (12) pouvant tourner par rapport à la première partie de ferrure (11) autour d'un axe de rotation (Y) de la ferrure, au niveau de laquelle est réalisée une roue dentée frontale (15) qui s'engrène avec la couronne dentée creuse (17) de telle sorte que les deux parties de ferrure (11, 12) soient en liaison d'engrènement l'une avec l'autre et un moyen excentrique en rotation (14), supporté de manière rotative et entraîné par un dispositif d'entraînement (20) pour l'entraînement d'un mouvement de roulement relatif de la roue dentée frontale (15) et de la couronne dentée creuse (17), la première partie de ferrure (11) présentant une bride (17A) venant en prise pardessus la deuxième partie de ferrure (12), qui forme par rapport à la première partie de ferrure (11), dans la direction axiale (A) de la ferrure, un gradin (17B), la bride (17A) de la première partie de ferrure (11) étant en liaison avec une première plaque d'adaptateur (11A) de la première partie de ferrure (11) par le biais de ses surfaces tournées l'une vers l'autre dans la direction axiale (A) de la ferrure, **caractérisée en ce que** la première plaque d'adaptateur (11A) est disposée dans un espace intermédiaire axial qui est formé par la deuxième partie de ferrure (12) et une deuxième plaque d'adaptateur (12A) de la deuxième partie de ferrure (12) de telle sorte qu'une fixation axiale de la deuxième partie de ferrure (12) située entre la première plaque d'adaptateur (11A) et la première partie de ferrure (11) puisse être réalisée par la connexion de la première partie de ferrure (11) à la première plaque d'adaptateur (11A) et par la bride (17A) de la première partie de ferrure (11) venant en prise par le dessus avec la deuxième partie de ferrure (12).

2. Ferrure selon la revendication 1, **caractérisée en ce que** la première partie de ferrure (11) est réalisée en forme de pot, à la manière d'un "U", le gradin axial (17B) de la bride (17A) formant par rapport au disque de la première partie de ferrure (11) un bord de la première partie de ferrure en forme de pot (11), de telle sorte que la deuxième partie de ferrure (12) s'insère dans le plan de la bride (17A) dans la première partie de ferrure en forme de U (11).

3. Ferrure selon la revendication 1, **caractérisée en ce que** la première plaque d'adaptateur (11A) et la bride (17A) de la première partie de ferrure (11) sont soudées l'une à l'autre par le biais de leurs surfaces tournées l'une vers l'autre dans la direction axiale (A) de la ferrure à partir de la direction radiale (R) et forment une première unité cinématique (11, 11A, 17A) par la connexion réalisée par le biais d'un premier joint de soudure (S1).

4. Ferrure selon la revendication 3, **caractérisée en ce que** la première plaque d'adaptateur (11A) et la bride (17A) de la première partie de ferrure (11) sont soudées au laser l'une à l'autre par le biais de leurs surfaces tournées l'une vers l'autre dans la direction axiale (A) de la ferrure à partir de la direction radiale (R).

5. Ferrure selon la revendication 1, **caractérisée en ce que** la denture interne (18) de la couronne dentée creuse (17) de la première partie de ferrure (11) réalisée dans la direction radiale (R) est réalisée sur le côté intérieur de la bride (17A) situé dans la direction radiale (R) et vient en prise dans la denture extérieure (16) de la roue dentée frontale (15) de la deuxième partie de ferrure (12) opposée disposée également dans la direction radiale (R), de sorte que les deux parties de ferrure (11, 12) sont en liaison d'engrènement l'une avec l'autre.

6. Ferrure selon la revendication 1, **caractérisée en ce que** la deuxième plaque d'adaptateur (12A) et une deuxième bride saillante (25) de la deuxième partie de ferrure (12) sont soudées l'une à l'autre par le biais de leurs surfaces tournées l'une vers l'autre dans la direction radiale (R) de la ferrure à partir de la direction axiale (A) et forment une deuxième unité cinématique (12, 12A, 25) par la connexion réalisée par le biais d'un deuxième joint de soudure (S2).

7. Ferrure selon la revendication 1, **caractérisée en ce que** la deuxième plaque d'adaptateur (12A) et une deuxième bride saillante (25) de la deuxième partie de ferrure (12) sont soudées au laser l'une à l'autre par le biais de leurs surfaces tournées l'une vers l'autre dans la direction radiale (R) de la ferrure à partir de la direction axiale (A).
